# EUROPEAN PATENT APPLICATION

(11) **EP 2 031 521 A1**
(43) Date of publication of application: **04.03.2009**
(21) Application number: 08100344.4
(22) Date of filing: 11.01.2008
(51) Int. Cl.: G06F 17/30, G06F 17/28

(54) **System and method for translating the content of a terminological database**

(71) Applicant: Carecom A/S, 2900 Hellerup (DK)
(72) Inventor: Hansen, Jacob Boye, 2830, Virum (DK)
(74) Representative: HOEIBERG A/S

(57) **Abstract**

The invention relates to a system and a method for translating, mapping and/or editing the content of a database, such as a database comprising medical terminologies and/or medical classifications, wherein the system comprises means for dividing said database content into subsets, and means for providing at least one of said subsets to at least one user in a workflow based process, wherein said workflow process comprises at least the steps of assigning at least one user with at least one specific role in the workflow process and approving each translated, mapped and/or edited concept through a series of review phases. The workflow process provided by the system creates a working procedure for managing the task of translating, mapping and/or editing the content of the database. Databases comprising medical terminologies such as SNOMED CT® and/or medical classifications such as ICD-1 0 are supported by the system according to the invention.

## Description

The invention relates to a system and a method for translating, mapping and/or editing the content of a database, such as a database comprising medical terminologies and/or medical classifications. Moreover, the invention relates to a computer-readable medium for implementing such a system on a computer network.

SNOMED CT®, short for Systematized Nomenclature of Medicine, is a systematically organized collection of medical terminology covering most areas of clinical information such as diseases, findings, procedures, micro-organisms, pharmaceuticals, etc. The systematic organization of SNOMED CT® allows computer processed indexation. Application of SNOMED CT® provides a consistent way to index, store, retrieve and aggregate clinical data across specialties and sites of care. SNOMED CT® also provides organization of the content of medical records and reduces the variability in the way data is captured, encoded and used for clinical care of patients and research.

Clinicians and organizations use different clinical terms that have the same meaning. For example, the terms heart attack, myocardial infarction, and MI may be identical terms for a cardiologist, but to a computer they are all different. It is necessary to exchange clinical information consistently between different healthcare providers, care settings, researchers and others, and because medical information is recorded differently from place to place (on paper or electronically), a comprehensive, unified medical terminology system such as SNOMED CT® is needed as part of the medical information infrastructure. SNOMED CT® is the most comprehensive clinical vocabulary available in any language, covering most aspects of clinical medicine with over 344.000 concepts.

SNOMED CT® is a compositional concept system. Thereby concepts can be specialized by combinations with other concepts. SNOMED CT® is based on the American terminology SNOMED and the British terminology CTV3 (Read Codes).

The components of SNOMED CT® are:
- Concepts:: Basic unit of meaning designated by a 16 digits unique numeric code, unique name (Fully Specified Name) and other descriptions, including a preferred term and possibly a synonym.
- Descriptions:: Fully Specified Name, Preferred Term, Synonym, Unspecified assigned to a concept.
- Hierarchies:: 19 higher level hierarchies; each higher level has sub-hierarchies.
- Relationships:: Link concepts either within a hierarchy or across hierarchies.
- Subsets:: Criteria based extracts of concepts from one or more hierarchies

The benefit of recording information in a standard terminology, such as SNOMED CT®, is linked to the benefits of the electronic healthcare record and the benefits of recording clinical information in a structured form. In short SNOMED CT®
- provides a consistent terminology across all healthcare domains,
- allows precise recording of clinical information,
- has an inherent structure, and
- is a developing international standard.

### Summary of the invention

### Translation

Medical classification and terminology has been widely used for years with different classifications and terminologies in different languages in different countries. For the electronic documentation of treatment and care to be implemented efficiently, e.g. across borders, many healthcare systems are facing the task of implementing SNOMED CT® terminology, because SNOMED CT® is the most comprehensive terminology system related to the healthcare environment. But SNOMED CT® is only complete in English and it is of utmost importance for local healthcare systems that every single medical term has the correct definition. Thus, it is an object of the invention to provide a system and a method for translating the terminology in SNOMED CT® from English to a local language and concurrently ensure that each term is translated correctly.

This is achieved by a system for translating at least a part of the content of a first database from a first language to at least a second language, said system comprising:
- said first database comprising content in at least said first language, and
- means for dividing said database content into subsets, and
- means for providing at least one of said subsets to at least one user in a workflow based translation process, wherein said workflow process comprises at least the steps of assigning at least one user with at least one specific role in the translation process and approving each translated concept through a series of review phases, and
wherein said system comprises:
- means for appending at least one synonym and/or synonymous term for each specific concept in the translation process and subsequently inserting said synonym(s) and/or synonymous term(s) in the workflow process, and/or
- means for providing at least one user with at least one, preferably multilingual, list of concepts relating to, synonymous with and/or similar translations of a specific concept in the translation process through at least a first concordance search in at least one database, and
- means for providing a database of documents available for at least a second concordance search.

The object of the invention is furthermore achieved by a method for translating at least a part of the content of a first database from a first language to at least a second language, said first database comprising content in at least said first language, said method comprising the steps of:
- dividing said database content into subsets, and
- providing at least one of said subsets to at least one user in a workflow based translation process, wherein said workflow process comprises at least the steps of assigning at least one user with at least one specific role in the translation process and approving each translated concept through a series of review phases, and
wherein said method comprises the steps of:
- appending one synonym and/or synonymous term for each specific concept in the translation process and subsequently inserting said synonym and/or synonymous term in the workflow process, and/or
- providing at least one user with at least one, preferably multilingual, list of concepts relating to, synonymous with and/or similar translations of a specific concept in the translation process through at least a first concordance search in at least one database, and
- providing a database of documents available for at least a second concordance search.

### Mapping

Numerous databases of medical terminologies and classifications exist. When implementing a new terminology and/or classification in a healthcare system mapping concepts between two or more different terminology databases, and/or between terminology and classification databases, is needed. Mapping is achieved by creating new relations between two or more concepts. Mapping is performed using predefined rules, which are validated before a mapping can be published in the official terminology. Therefore it is an object of the invention to provide a system for mapping between different terminology and/or classification databases.

This is achieved by a system for mapping at least part of the content of a first database to at least one second database, said system comprising:
- means for dividing said database content into subsets, and
- means for providing at least one of said subsets to at least one user in a workflow based mapping process, wherein said workflow process comprises at least the steps of assigning at least one user with at least one specific role in the mapping process and approving each mapped concept through a series of review phases, and
- means for providing at least one user with most probable mapping for each specific concept in the mapping process through at least a first concordance search in at least one database, and/or
wherein said system comprises
- means for mapping two or more concepts of a sub-hierarchy to a single concept, and/or
- means for providing at least one user with at least one, preferably multilingual, list of concepts relating to, synonymous with and/or similar mappings of a specific concept in the mapping process through at least a second concordance search in at least one database.

The object of the invention is furthermore achieved by a method for mapping at least part of the content of a first database to at least one second database, said method comprising the steps of:
- dividing said database content into subsets, and
- providing at least one of said subsets to at least one user in a workflow based mapping process, wherein said workflow process comprises at least the steps of assigning at least one user with at least one specific role in the mapping process and approving each mapped concept through a series of review phases, and
- providing at least one user with most probable mapping for each specific concept in the mapping process through at least a first concordance search in at least one database,
wherein said method comprises the steps of:
- mapping two or more concepts of a sub-hierarchy to a single concept, and/or
- providing at least one user with at least one, preferably multilingual, list of concepts relating to, synonymous with and/or similar mappings of a specific concept in the mapping process through at least a second concordance search in at least one database.

When mapping between databases, e.g. from a source database to a target database, mapping rules may be established for each concept being mapped. In a preferred embodiment of the system according to the invention such mapping rules are saved and/or stored for each specific concept mapped. If any of the databases comprised in the mapping process is updated and/or changed in any way, the mapping rules already established and saved can again be applied, e.g. in an initial mapping process, whereby several steps in the mapping process might be skipped.

When mapping between databases the mapping relationships are not always one to one, i.e. the granularity and/or the level of detail can be different between the source and the target database. A hierarchy may have a plurality of sub-hierarchies in only one of the source or target databases. In a preferred embodiment of the invention two or more concepts of a sub-hierarchy can be mapped to a single concept. In a preferred embodiment of the invention a single concept can be mapped to two or more concepts, independently of which hierarchies and/or sub-hierarchies the concepts belong to.

### Editing

There might be a need for local differences and/or additions in terminology and/or classification databases in different healthcare systems, e.g. in different countries and/or different continents. Therefore it is an object of the invention to provide a system and a method for editing existing terminology and/or classification databases.

This is achieved by a system for editing at least part of the content of a first database, said system comprising:
- means for calculating best possible locations for new concepts in the first database by means of a computer implemented algorithm working in a real-time online environment, and/or
wherein said system comprises:
- means for dividing said database content into subsets, and
- means for providing at least one of said subsets to at least one user in a workflow based editing process, wherein said workflow process comprises at least the steps of assigning at least one user with at least one specific role in the editing process and approving each edited concept through a series of review phases.

The object of the invention is furthermore achieved by a method for editing at least part of the content of a first database, said method comprising the steps of:
- calculating best possible locations for new concepts in the first database by means of a computer implemented algorithm working in a real-time online environment, and/or
wherein said method comprises the steps of:
- dividing said database content into subsets, and
- providing at least one of said subsets to at least one user in a workflow based editing process, wherein said workflow process comprises at least the steps of assigning at least one user with at least one specific role in the editing process and approving each edited concept through a series of review phases.

The invention furthermore includes a computer program product having a computer readable medium, said computer program product comprising means for carrying out any of the listed methods.

### Detailed description of the invention

### The workflow process

By the system according to the invention the often extensive task of translating and/or mapping and/or editing hundreds, or thousands or even hundreds of thousands of concepts in a database is divided into comprehensible tasks for the users. The workflow process provided by the system creates a working procedure for managing the task. The content of the database, or at least part of said content, may be divided into subsets and said subsets can be distributed to at least one user. The division into subsets can be provided by the single user and/or system managers and subsequently distributed to at least one user, preferably a plurality of users. In a preferred embodiment subset query means are provided to users of the system. Subsets can thereby be created by criteria based extracts of concepts from one or more hierarchies. Once a subset is provided to a user of the system the workflow process can be initiated. The specific user has been provided with at least one role in the workflow process. This role is either provided to the user, e.g. by a system manager, and/or the role is determined by the user himself. In the workflow process each concept being translated and/or mapped and/or edited must be approved, preferably approved through a series of review phases. Each user role is related to at least one of the phases of the review process.

For each user working with specific concepts in the workflow process in the system according to the invention a conceptual hierarchical view for each concept can be provided. Thereby the location of each concept in the hierarchy in a database can be provided, whereby an overview is provided to the user. A poly-hierarchic terminology, such as SNOMED CT®, is also supported by the system according to the invention.

### The review process

Having the correct meaning of a disease or a concept in a database of medical terminologies is of utmost importance and any errors can be a matter of life and death to patients. Thus, the approval through the review process is a preferably part of the system. In a preferred embodiment of the system according to the invention the review phases comprise one or more of the steps of: initial translation, initial mapping, initial editing, review of initial process, authorization by at least one expert and/or specialist, authorization by at least one official authority and final authorization. First step in the translation process may be a translation, for example a translation provided by an external provider such as a translation bureau. A further step may be a review and/or authorization of the initial translation by a person with professional and/or technical knowledge. Next step could be a review by a person in relation to an official authority, such as a national board of health. A final step could be an authorization by a high ranking and/or person in charge with or without connection to the same, or another, official authority.

### Synonyms

Concepts can have at least one similar term with the same or nearly the same meaning. In the translation process it is quite helpful to be able to see and/or provide similar terms. Being able to see similar terms to a specific concept can provide a user a better understanding of the specific concept. In a preferred embodiment of the system according to the invention, it is possible for users to append at least one synonym to each specific concept in the translation process. But when appending a synonym the same rules must apply, i.e. it is of utmost importance that each concept is understood correctly and a wrongly appended synonym can provide a faulty understanding. Therefore, the synonym appended during the translation immediately enters the approval process of a series of reviews in the workflow process, i.e. the appended synonym enters the workflow process subsequently to entering the system.

### Searching for concordance

Help can furthermore be provided to the users in the translation and/or mapping and/or editing processes by searching at least one database for relating terms and/or words and/or definitions to each specific concept. In a preferred embodiment a concordance search automatically provides related terms and/or words and/or definitions to each specific concept. The search can be carried out in a plurality of databases and subsequently the search results can be provided to the user, e.g. results comprising a list of: Synonymous terms, concepts relating to the specific concept, similar translations of the specific concept and/or mappings of the specific concept. The concordance search preferably lists the results after relevance. Search results can furthermore be provided to the users in more than one language.

At least one of the concordance searches can possibly bring up related concepts also being part of the workflow process. In a preferred embodiment of the invention the status, e.g. the status of a specific concept in the review process, and/or the history of changes is provided for each concept brought up in the concordance search. I.e. for each specific concept shown in the concordance search the user is provided with information of where each specific concept is in the workflow process, e.g. whether it is in the phase of initial translation or first review or has got a final approval. Thereby the user is provided with information of which relevance and/or significance to apply to each concept provided by the concordance search.

In the workflow process documents containing relevant information can preferably be provided to assist the users. In a preferred embodiment of the system according to the invention a database of documents is available to at least one concordance search. In one embodiment of the invention a concordance search in the database of documents is activated by a user by manual interaction, e.g. text relevant to the specific concept is entered and relevant search results are subsequently provided to the user. To clarify the search result the relevant parts of the documents in the search result are highlighted. In another embodiment of the invention the database of documents is included in the automatic concordance search provided to each specific concept in the workflow process.

In one embodiment of the system according to the invention a concordance search in at least one database provides at least one list of the most probable and/or the best possible mapping of a specific concept in a situation wherein mapping of at least part of the content of at least one database is performed, e.g. mapping between the concepts of different medical classification databases. Users are thereby assisted in the workflow based mapping process, because for every specific concept being mapped a list of similar mappings will be provided, based on said concordance search. At least one concordance search to assist the mapping process can comprise a search in the source database, and/or the target database, and/or a plurality of other databases, e.g. a database of relevant documents provided to assist the users. By the source database is understood the database from where concepts are mapped, the target database is the database whereto concepts are mapped.

In a preferred embodiment of the system according to the invention a database of documents, such as documents in formats like text, Word, Excel, PDF and/or the like, can be made available to a concordance search, preferably provided to each user for each concept in the workflow process. Relevant documents can be dictionaries, such as medical dictionaries, various manuals, medical evidence, scientific papers, etc. For a large database of documents the result of a concordance search might be overwhelming. In a preferred embodiment of the system each document in said database of documents can be provided with a mark, indication, tag, label and/or the like, to provide users with an indication of the relevance and/or significance and/or weight and/or importance of each document, whereby users is provided with knowledge of how to weigh the information in and/or attach importance to the results and/or information provided by the concordance search in the database of documents. In one embodiment of the invention any document can be linked to a least one specific concept and/or batch and/or concept and/or subset, thereby directing the information in a specific document to only relevant users.

### History of changes

To assist users in the workflow process each specific concept can be provided with a status and/or a history of changes. Thereby users are provided with information of any previous changes to each specific concept. Any changes to any concepts are immediately stored in a database and subsequently provided to all relevant users, i.e. users that are working on these specific concepts. A status of each concept can also be provided to each user. Thereby information about the status of each concept in e.g. the review phases is provided to each user in the workflow process. Preferably the status of each concept and/or history of changes of each concept is provided in connection with the concordance search. Thereby each concept provided in the concordance search is provided with a status in the review process and/or a history of changes.

### Subsets

In a preferred embodiment of the system according to the invention subset query means are provided to the users. Thereby subsets of databases can be selected by users, e.g. by status searching means, by conceptual means and/or by selection from a multitude of criteria describing characteristics and/or defining the concepts wanted in the result set.

In a preferred embodiment of the system according to the invention means for distributing the subsets to a plurality of users in a shared multiple user environment are comprised. Thereby a person, such as a system administrator or a group manager of the system, can choose the relevant subsets and subsequently distribute said subsets to users for initiating the workflow process. A plurality of users can access the system simultaneously and concurrently work in workflow processes. In a preferred embodiment means for providing concurrent access for a plurality of users to a specific subset of the first database in the workflow process, is comprised in the system according to the invention. Thereby different users can access both different subsets and the same subset concurrently in the workflow process.

It may be advantageous to provide means for dividing subsets into smaller parts, such as batches of subsets, because a subset might comprise several thousands concepts. Dividing subsets into batches provides the users with a reasonable amount of concepts to cope with in the workflow process. In a preferred embodiment of the invention, the system comprises means for selecting a conceptual subset of a database, dividing said subset into batches and distributing the batches between users for a workflow based translation and/or mapping and/or editing of said batches.

### User rights and user roles

In a preferred embodiment of the system according to the invention a person such as a group manager of the system, can create, provide and/or distribute user rights and or user roles to a plurality of users. Thereby it is centrally controlled which rights and/or roles that are provided to a specific user. A single user can be provided with several different user rights and/or user roles in the workflow process. Examples of user roles are the role of providing the initial translation of a concept or the role of providing the first review of a translated concept. A user right can be the right to actively select a subset and subsequently adding said subset to the workflow process.

With a plurality of users in the system, the level of experience of each user can be varying. In a preferred embodiment of the system according to the invention the user interface provided to each user is dependent on the experience of the user. This dependence, and thereby the sort of the user interface, is dependent on the specific user rights. In another embodiment of the invention the user interface in the system can be selected by the specific user.

### Further details regarding the invention

In a preferred embodiment of the system according to the invention the first database comprises medical terminologies such as SNOMED CT® and/or medical classifications such as ICD (International Classification of Diseases), more specifically such as ICD-10.

In one embodiment of the invention the translation and/or mapping and/or editing processes are involving two or more databases, e.g. when mapping between two different databases. In a preferred embodiment of the system according to the invention only a single database is involved, e.g. the mapping process involves mapping and/or linking concepts and/or terms within a single database.

In a preferred embodiment of the system according to the invention the system is hosted on, and provided through, at least one web server. Thereby the system is provided in an online environment, e.g. through an internet and/or intranet website. Users access the system through a computer network, such as the internet or a local area network (LAN).

### Algorithm for calculating best location

When adding new concepts and/or editing existing concepts in the content of a database help can be provided to users in the workflow based editing process if a list of possible locations of the newly added and/or edited concept is provided. In a preferred embodiment of the invention a computer implemented algorithm provides best possible location for new and/or edited concepts. In a preferred embodiment the algorithm is working in the online environment provided by the system according to the invention and the calculations provided by said algorithm are performed real-time. The calculations are preferably based on SNOMED CT® documentation describing Description Logic. One embodiment of said algorithm will be explained in further detail in the following.

The algorithm is designed to place a new concept in a SNOMED CT® hierarchy. The algorithm is based on description logic. To place a new concept A, said concept is tested against existing concepts to see if A is below or above or not related to them at all. Therefore there are two aspects to this algorithm. The first aspect consists of testing two concepts against each other (also known as the subsumption test). The other aspect is the choosing of concepts to test against A. These two aspects have been designed and optimized separately. The result of the algorithm provides the concepts that are immediately above and below A in the SNOMED CT® hierarchy (also referred to as the direct parents and direct children of A). This information is all that is needed to place A correctly in the SNOMED CT® hierarchy.

It has been useful to split up the subsumption test in two parts. These will be referred to as the "A is a B"-test and the "B is an A"-test. For a concept B, the "A is a B"-test tests if the concept B is above A in the SNOMED CT® hierarchy and the "B is an A"-test tests if B is below A in the SNOMED CT® hierarchy. So it is possible to execute the "A is a B"-test on one set of concepts and the "B is an A"-test on another set of concepts.
More precisely, the algorithm first looks for super concepts of A using the "A is a B"-test and then for sub concepts to A using the "B is an A"-test. The search for super concepts of A starts at the top and moves down the SNOMED CT® hierarchy. The first concept being tested is the top-hierarchy (under which A is chosen to be placed) and thereafter the direct children of the top-hierarchy are tested. The concepts for which this test succeeds are then picked out and tested. This way the algorithm continues downward until the "A is a B"-test does not succeed anymore. Among the super concepts of A that have been found, the ones immediately above A (i.e. the direct parents of A) are chosen. If the concept A is primitive, the algorithm does not test for children (since it is a new concept), so no search for sub concepts of A is necessary. If A is not primitive (i.e. fully defined) the search for sub concepts of A is conducted.

The search for sub concepts of A can be limited to the set of concepts below the immediate parents of A. Firstly, all the concepts at the bottom of this set (i.e. concepts without any children) are tested for being sub concepts of A. Immediate parents of the concepts for which this test succeeds are then tested themselves. Similarly, this continues upwards in the hierarchy until the test does not succeed anymore. Among these sub concepts of A, the ones directly below A (i.e. the immediate children of A) are chosen. Note that this way of picking out concepts to test against A is in a certain sense the same as in the search for super concepts of A, just turned "upside-down". For a concept B, the "A is a B"-test functions by first putting A in long normal form and B in short normal form, and hereafter the structure of these can be compared. Long normal form for a concept consists of three parts; the ungrouped defining relationships, the grouped defining relationships and the proximal primitive super concepts. For a concept B, the short normal form has the same immediate primitive super concepts, but only the defining relationships (grouped or ungrouped) that are not already defining relationships for all the immediate primitive super concepts for B are used for comparison. The "A is a B"-test functions by comparing the three parts of A's long normal form and B's short normal form by lookups in a transitive closure table.

### Description of Drawings

The invention is further disclosed with reference to the accompanying drawings, in which:
- fig. 1: is a list of SNOMED CT® concepts,
- fig. 2: is an illustration of one embodiment of the workflow model,
- fig. 3: is an illustration of one embodiment of the workflow in the translation process, and
- fig. 4: is an illustration of one embodiment of the workflow in the mapping process.

### Figure 1

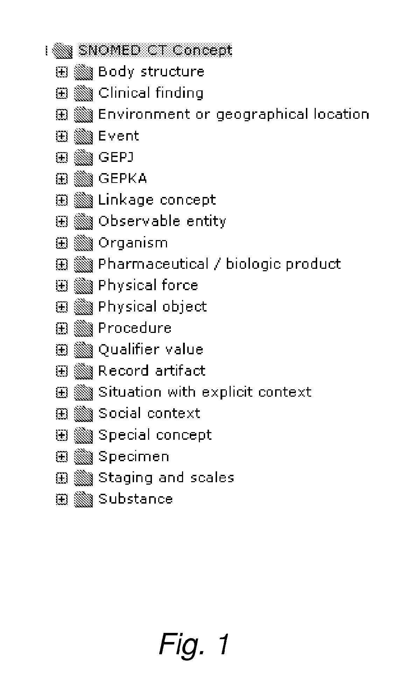

Fig. 1 shows a list of SNOMED CT® concepts. Each of these concepts may have one or more sub-hierarchies.

### Use of workflows

The application of a workflow is for controlling and/or managing and/or organizing and/or guiding some sort of procedure, such as a working procedure. A workflow comprises at least one state. The states of the workflow can be pre-defined or can be defined during application of the workflow. The workflow process is the procedure of passing through these states. Not all states are necessarily applied during the workflow process and the order of the states is not necessarily pre-defined. For each state in the workflow process at least one action and/or achievement and/or objective and/or goal is defined. An action in a state in the workflow process can e.g. have the objective of bringing the workflow to another state in said workflow process. The objective and/or goal of each workflow process is to reach some sort of final state wherein the workflow process is finished.

### Figure 2

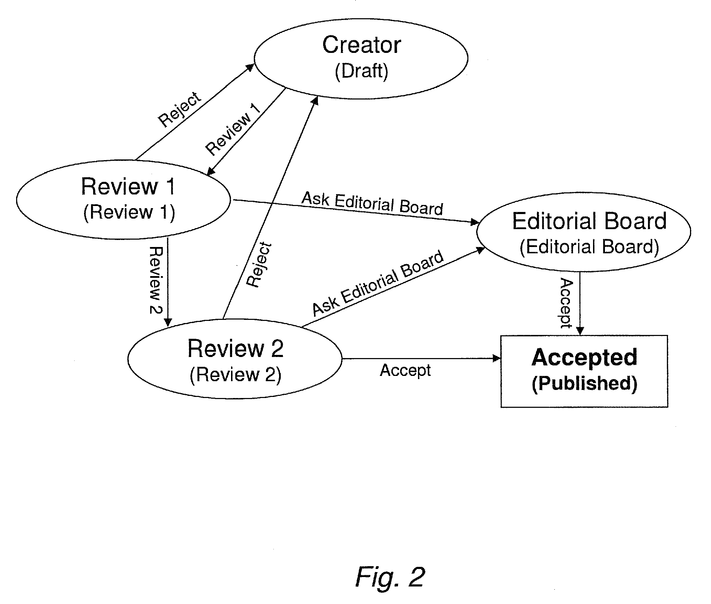

In the system according to the invention at least one user role is associated with at least one action in at least one state in a workflow process. Fig. 2 shows an example of a workflow process in one embodiment of the invention. In the shown example in fig. 2 four user roles are illustrated: Creator, Review 1, Review 2 and Editorial Board. Each of these user roles is associated with a state in the shown workflow process. The objective of the workflow process in this example is to reach the final state of "Accepted". The arrows between the states illustrate how concepts move between the different states. As seen from the arrows there is no unequivocal way to reach the final state of the workflow process. A short way through the illustrated workflow could be:
1. Initial process performed by the "Creator".
2. First phase in an approval process performed by Review 1.
3. Second, and final, phase in said approval process performed by Review 2.
4. Final state: Accepted.

But there are other ways through the workflow process. From Review 1 the process can also go to an Editorial Board or go back to the Creator. In a similar way Review 2 can send the work back to Review 1, accept the work or send the work further on to the Editorial Board. All through the processes the objective of the workflow is to end up in the final state. In the specific states certain roles are associated, e.g. final acceptance can only be provided by Review 2 and the Editorial board, never Review 1 and Creator. And Review 1 always performs the first review after the Creator.

### Figure 3

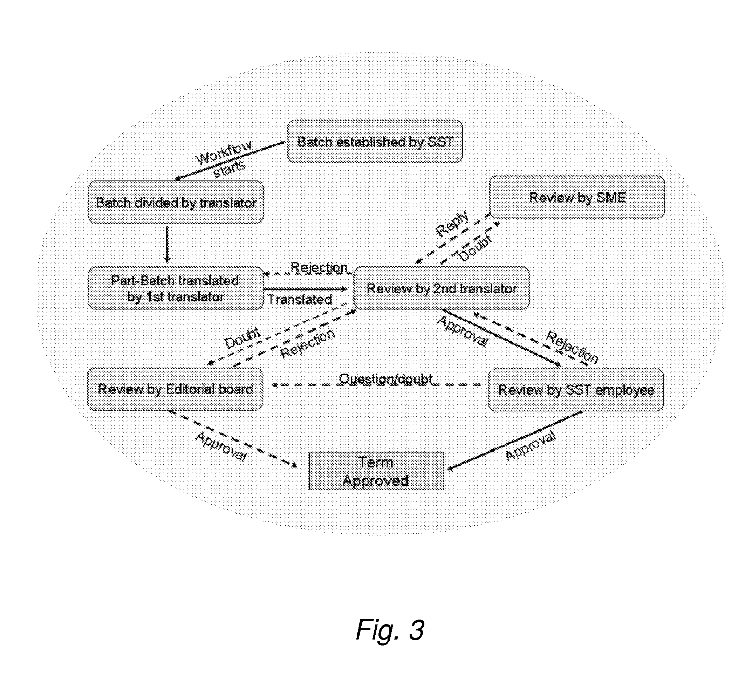

Fig. 3 is a more detailed illustration of one embodiment of a translation system according to the invention. Batches are created, preferably from subsets of the content of a database and the batches are subsequently distributed to a plurality of users. The following steps illustrate the process of translating a single concept:
- Subsets are divided into smaller batches, suitable for translator and translator reviewer, SME (Subject Matter Expert), while at the same time the relevant roles are assigned. Each single concept in a batch is translated by the translator.
- A second translator reviews the translation of the single concept provided by the first translator. If the first translation is rejected it is sent back to the first translator for a new translation. If in doubt, the second translator can get a second opinion by a SME or an editorial board. An approval by the second translator is sent to an employee of the body responsible for a translation project, such as a national board of health.
- This employee can either reject or approve the concept provided by the second translator. If in doubt this employee can get a second opinion from the editorial board.
- Only this employee and the editorial board can provide a final approval of the concept's translation.

A translator is able to make comments and link to any source material that has been used in the translation, e.g. a dictionary on a given page. When the translation is reviewed, the reviewer is able to see the sources of the translation and attached comments. Again, the reviewer is able to make supplementary comments and new links to sources, which may be reviewed in the final approval of the translation of the concept.

### Figure 4

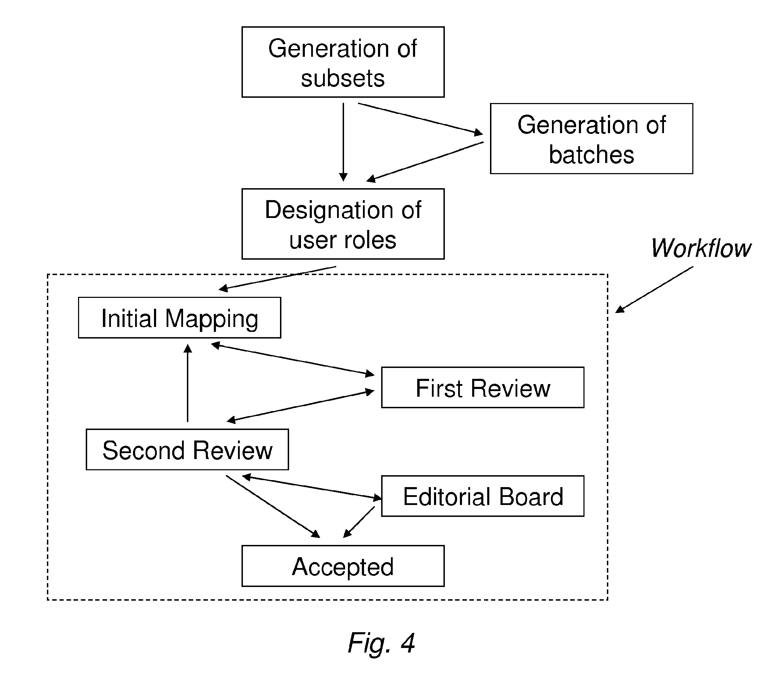

An example of the mapping process in one embodiment of the system according to the invention is shown in fig. 4. Subsets are generated, e.g. subsets from the content of a source database wherefrom a plurality of concepts are to be mapped to a concept in a target database. The subsets are generated by a system manager or administrator. The subsets can be further divided into batches by the same system administrator or by a lower ranking system authority, such as a concept manager. The concept manager and/or the system administrator distributes the subsets and/or the batches to a plurality of users and also associate user roles to the same plurality of users, e.g. user roles such as initial mapper, first reviewer, second reviewer and editorial board. As soon as the user, assigned to a given map set, enters the system, the workflow based mapping process is initiated and subsequently administers the procedure for every single concept being mapped.

## Claims

1. A system for translating at least a part of the content of a first database from a first language to at least a second language, said system comprising:
- said first database comprising content in at least said first language, and
- means for dividing said database content into subsets, and
- means for providing at least one of said subsets to at least one user in a workflow based translation process, wherein said workflow process comprises at least the steps of assigning at least one user with at least one specific role in the translation process and approving each translated concept through a series of review phases, and
wherein said system comprises:
- means for appending one synonym and/or synonymous term for each specific concept in the translation process and subsequently inserting said synonym and/or synonymous term in the workflow process, and/or
- means for providing one user with at least one, preferably multilingual, list of concepts relating to, synonymous with and/or similar translations of a specific concept in the translation process through at least a first concordance search in at least one database, and
- means for providing a database of documents available for at least a second concordance search.

2. A system for mapping at least part of the content of a first database to at least one second database, said system comprising:
- means for dividing said database content into subsets, and
- means for providing at least one of said subsets to at least one user in a workflow based mapping process, wherein said workflow process comprises at least the steps of assigning at least one user with at least one specific role in the mapping process and approving each mapped concept through a series of review phases, and
- means for providing at least one user with most probable mapping for each specific concept in the mapping process through at least a first concordance search in at least one database,
wherein said system comprises
- means for mapping two or more concepts of a sub-hierarchy to a single concept, and/or
- means for providing at least one user with at least one, preferably multilingual, list of concepts relating to, synonymous with and/or similar mappings of a specific concept in the mapping process through at least a second concordance search in at least one database.

3. A system for editing at least part of the content of a first database, said system comprising:
- means for calculating best possible locations for new concepts in the first database by means of a computer implemented algorithm working in a real-time online environment, and/or
wherein said system comprises:
- means for dividing said database content into subsets, and
- means for providing at least one of said subsets to at least one user in a workflow based editing process, wherein said workflow process comprises at least the steps of assigning at least one user with at least one specific role in the editing process and approving each edited concept through a series of review phases.

4. A system according to any of the preceding claims, furthermore comprising means for distributing the subsets to a plurality of users in a shared multiple user environment.

5. A system according to any of the preceding claims, furthermore comprising means for providing concurrent access for a plurality of users to a specific subset of the first database in the workflow process.

6. A system according to any of the preceding claims, furthermore comprising means for creation and/or distribution of user rights and/or user roles to a plurality of users.

7. A system according to any of the preceding claims, wherein subset query means are provided to at least one user.

8. A system according to any of the preceding claims, furthermore comprising means for selecting a conceptual subset of said first database, dividing said subset into batches and distributing the batches between users for a workflow based translation and/or mapping and/or editing of said batches.

9. A system according to any of the preceding claims, furthermore comprising means for providing each user with a history of changes to each specific concept in the workflow process.

10. A system according to any of the preceding claims, furthermore comprising means for providing the status of each specific concept in the workflow process.

11. A system according to any of the preceding claims, furthermore comprising means for providing a concept hierarchy view for each specific concept in the workflow process.

12. A system according to any of the preceding claims, furthermore comprising means for providing a user dependent user interface.

13. A system according to any of the preceding claims, wherein said first database comprises medical terminologies, such as SNOMED CT®, and/or medical classifications, such as ICD-10.

14. A system according to any of the preceding claims, wherein the system is hosted on, and provided through, at least one web server.

15. A system according to any of the preceding claims, wherein the review phases comprise one or more of the steps of: initial translation, initial mapping, initial editing, review of initial step, authorization by at least one expert and/or specialist, authorization by at least one official authority and final authorization.

16. A system according to any of the preceding claims, wherein said first database and/or said second database are comprised in a single database.

17. A system according to any of the preceding claims, furthermore comprising means for storing the mapping rules for each specific concept in the workflow process.

18. A system according to any of the preceding claims, wherein said database of documents is available for at least said first concordance search and/or said second concordance search.

19. A system according to any of the preceding claims, furthermore comprising means for attaching relevance and/or weight to the documents available for the concordance search, and subsequently providing said relevance and/or weight in the workflow process.

20. A method for translating at least a part of the content of a first database from a first language to at least a second language, said first database comprising content in at least said first language, said method comprising the steps of:
- dividing said database content into subsets, and
- providing at least one of said subsets to at least one user in a workflow based translation process, wherein said workflow process comprises at least the steps of assigning at least one user with at least one specific role in the translation process and approving each translated concept through a series of review phases, and
wherein said method comprises the steps of:
- appending one synonym and/or synonymous term for each specific concept in the translation process and subsequently inserting said synonym and/or synonymous term in the workflow process, and/or
- providing at least one user with at least one, preferably multilingual, list of concepts relating to, synonymous with and/or similar translations of a specific concept in the translation process through at least a first concordance search in at least one database, and
- providing a database of documents available for at least a second concordance search.

21. A method for mapping at least part of the content of a first database to at least one second database, said method comprising the steps of:
- dividing said database content into subsets, and
- providing at least one of said subsets to at least one user in a workflow based mapping process, wherein said workflow process comprises at least the steps of assigning at least one user with at least one specific role in the mapping process and approving each mapped concept through a series of review phases, and
- providing at least one user with most probable mapping for each specific concept in the mapping process through at least a first concordance search in at least one database,
wherein said method comprises the steps of:
- mapping two or more concepts of a sub-hierarchy to a single concept, and/or
- providing at least one user with at least one, preferably multilingual, list of concepts relating to, synonymous with and/or similar mappings of a specific concept in the mapping process through at least a second concordance search in at least one database.

22. A method for editing at least part of the content of a first database, said method comprising the steps of:
- calculating best possible locations for new concepts in the first database by means of a computer implemented algorithm working in a real-time online environment, and/or
wherein said method comprises the steps of:
- dividing said database content into subsets, and
- providing at least one of said subsets to at least one user in a workflow based editing process, wherein said workflow process comprises at least the steps of assigning at least one user with at least one specific role in the editing process and approving each edited concept through a series of review phases.

23. A method according to any of claims 20 to 22, whereby the subsets are distributed to a plurality of users in a shared multiple user environment.

24. A method according to any of claims 20 to 23, whereby concurrent access to a specific subset of the first database in the workflow process is provided for a plurality of users.

25. A method according to any of claims 20 to 24, whereby creation and/or distribution of user rights and/or user roles to a plurality of users is provided.

26. A method according to any of claims 20 to 25, whereby subset query means are provided to at least one user.

27. A method according to any of claims 20 to 26, whereby selection of a conceptual subset of said first database, dividing said subset into batches and distributing the batches between users for a workflow based translation and/or mapping and/or editing of said batches is provided.

28. A method according to any of claims 20 to 27, whereby each user is provided with a history of changes to each specific concept in the workflow process.

29. A method according to any of claims 20 to 28, whereby the status of each specific concept in the workflow process is provided.

30. A method according to any of claims 20 to 29, whereby a concept hierarchy view is provided for each specific concept in the workflow process.

31. A method according to any of claims 20 to 30, whereby a user dependent user interface is provided.

32. A method according to any of claims 20 to 31, wherein said first database comprises medical terminologies, such as SNOMED CT®, and/or medical classifications, such as ICD-10.

33. A method according to any of claims 20 to 32, wherein the review phases comprise one or more of the steps of: initial translation, initial mapping, initial editing, review of initial step, authorization by at least one expert and/or specialist, authorization by at least one official authority and final authorization.

34. A method according to any of claims 20 to 33, wherein said first database and/or said second database are comprised in a single database.

35. A method according to any of claims 20 to 34, whereby the mapping rules for each specific concept in the workflow process may be stored.

36. A method according to any of claims 20 to 35, wherein said database of documents is available for at least said first concordance search and/or said second concordance search.

37. A method according to any of claims 20 to 36, whereby relevance and/or weight are attached to the documents available to the concordance search and subsequently provided in the workflow process.

38. A computer program product having a computer readable medium, said computer program product providing a system for translating at least a part of the content of a first database from a first language to at least a second language, said first database comprising content in at least said first language, and said computer program product comprising means for carrying out all the steps of the method according to claim 20.

39. A computer program product having a computer readable medium, said computer program product providing a system for mapping at least a part of the content of a first database to at least one second database, said computer program product comprising means for carrying out all the steps of the method according to claim 21.

40. A computer program product having a computer readable medium, said computer program product providing a system for editing at least a part of the content of a first database, said computer program product comprising means for carrying out all the steps of the method according to claim 22.

## Amended claims

### Amended claims in accordance with Rule 137(2) EPC.

**1.** A system for translating at least a part of the content of a first database from a first language to at least a second language, said system comprising:
- said first database comprising content in at least said first language, and
- means for dividing said database content into subsets, and
- means for distributing the subsets to a plurality of users in a shared multiple user environment, and
- means for proving at least one of said subsets to at least one user in a workflow based translation process, wherein said workflow process comprises at least the steps of assigning at least one user witch at least one specific role in the translation process and approving each translated concept through a series of review phases, and
wherein said system comprises:
- means for appending one synonym and/or synonymous term for each specific concept in the translation process and subsequently inserting said synonym and/or synonymous term in the workflow process, and/or
- means for providing one user with at least one, preferably multilingual, list of concepts relating to, synonymous with and/or similar translations of a specific concept in the translation process through at least a first concordance search in at least one database, and
- means for providing a database of documents available for at least a second concordance search.

**2.** A system according to any of the preceding claims, furthermore comprising means for providing concurrent access for a plurality of users to a specific subset of the first database in the workflow process.

**3.** A system according to any of the preceding claims, furthermore comprising means for creation and/or distribution of user rights and/or user roles to a plurality of users.

**4.** A system according to any of the preceding claims, wherein subset query means are provided to at least one user.

**5.** A system according to any of the preceding claims, furthermore, comprising means for selecting a conceptual subset of said first database, dividing said subset into batches and distributing the batches between users for a workflow based translation and/or mapping and/or editing of said batches.

**6.** A system according to any of the preceding claims, furthermore comprising means for providing each user with a history of changes to each specific concept is the workflow process.

**7.** A system according to any of the preceding claims, furthermore comprising means for providing the status of each specific concept in the workflow process.

**8.** A system according to any of the preceding claims, furthermore comprising means for providing a concept hierarchy view for each specific concept in the workflow process.

**9.** A system according to any of the preceding claims, furthermore comprising means for providing a user dependent user interface.

**10.** A system according to any of the preceding claims, wherein said first database comprises medical terminologies, such as SNOMED CT®, and/or medical classifications, such as ICD-10,

**11.** A system according to any of the preceding claims, wherein the system is hosted on, and provided through, at least one web server.

**12.** A system according to any of the preceding claims, wherein the review phases comprise one or more of the steps of: initial translation, review of initial step, authorization by at least one expert and/or specialist, authorization by at least one office authority and final authorization.

**13.** A system according to any of the preceding claims, wherein said database of documents is available for at least said first concordance search and/or said second concordance search,

**14.** A system according to any of the preceding claims, furthermore comprising means for attaching relevance and/or weight to the documents available for the concordance search, and subsequently proving said relevance and/or weight in the workflow process.

**15.** A method for translating at least a part of the content of a first database from a first language to at least a second language, said first database comprising content in at least said first language, said method comprising the steps of:
- dividing said database content into subsets, and
- distributing the subsets to a plurality of users in a shared multiple user environment, and
- providing at least one of said subsets to at least one user in a workflow based translation process, wherein said workflow process comprises at least the steps of assigning at least one user with at least one specific role in the translation process and approving each translated concept through a series of review phases, and
wherein said method comprises the steps of:
- appending one synonym and/or synonymous term for each specific concept in the translation process and subsequently inserting said synonym and/or synonymous term in theworkffow process, and/or
- providing at least one user with at least one, preferably multilingual, list of concepts relating to, synonymous with and/or similar translations of a specific concept in the translation process through at least a first concordance search in at least one database, and
- providing a database of documents, available for at least a second concordance search.

**16.** A method according to claim 15 whereby concurrent access to a specific subset of the first database in the workflow process is provided for a plurality of users.

**17.** A method according to any of claims 15 to 16, whereby creation and/or distribution of user rights and/or user roles to a plurality of users is provided.

**18.** A method according to any of claims 15 to 17, whereby subset query means are provided to at least one user.

**19.** A method according to any of claims 15 to 18, whereby selection of a conceptual subset of said first database, dividing said subset into batches and distributing the batches between users for a workflow based translation and/or mapping and/or editing of said batches is provided.

**20.** A method according to any of claims 15 to 19, whereby each user is provided with a history of changes to each specific concept in the workflow process.

**21.** A method according to any of claims 15 to 20, whereby the status of each specific concept in the workflow process is provided.

**22.** A method according to any of claims 15 to 21, whereby a concept hierarchy view is provided for each specific concept in the workflow process.

**23.** A method according to any of claims 15 to 22, whereby a user dependent user is provided.

**24.** A method according to any of claims 15 to 23, wherein said first database comprises medical terminologies, such as SNOMED CT®, and/or medical classifications, such as ICD-10.

**25.** A method according to any of claims 15 to 24, wherein the review phases compose one or more of the steps of: initial translation, review of initial step, authorization by at least one expert and/or specialist, authorization by at least one official authority and final authorization.

**26.** A method according to any of claims 15 to 25, wherein said database of documents is available for at least said first concordance search and/or said second concordance search.

**27.** A method according to any of claims 15 to 26, whereby relevance and/or weight are attached to the documents available to the concordance search and subsequently provided in the workflow process.

**28.** A computer program product having a computer readable medium, said computer program product providing a system for translating at least a part of the content of a first database from a first language to at least a second language, said first database comprising content in at least said first language, and said computer program product comprising means for carrying out all the steps of the method according to claim 15.
